# FASCICULE DE BREVET EUROPEEN

(11) **EP 1 023 142 B1**
(45) Date de publication et mention de la délivrance du brevet: **22.10.2003**
(21) Numéro de dépôt: 99936752.7
(22) Date de dépôt: 18.08.1999
(51) Int. Cl.: B25J 9/12, B25J 9/10, B25J 9/08

(54) **ELEMENT DE LIAISON A VERIN A VIS ET ECROU ET SON APPLICATION UN BRAS DE ROBOT**
VERBINDUNGSELEMENT MIT GEWINDESPINDELANTRIEB UND DESSEN VERWENDUNG IN EINEM ROBOTERARM
LINKING ELEMENT WITH SCREW JACK AND ITS USE FOR AN INDUSTRIAL ROBOT ARM

(30) Priorité: 19.08.1998 FR 9810549
(43) Date de publication de la demande: 02.08.2000
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: JOUAN DE KERVENOAEL, Tanguy, F-78640 Neauphle-le-Château (FR)
(74) Mandataire: Ilgart, Jean-Christophe
(86) Numéro de dépôt international: FR9902008
(87) Numéro de publication internationale: WO00010775

(56) Documents cités:
- EP-A- 0 426 264
- EP-A- 0 654 325
- FR-A- 2 220 344

## Description

On décrira ici un élément de liaison comprenant essentiellement un vérin à écrou et vis, ainsi qu'un bras de robot équipé de cet élément (voir, par exemple, EP 0 654 325 A).

Un avantage essentiel des vérins à vis et écrou est qu'ils permettent de transmettre des mouvements précis entre les deux pièces qu'ils relient tout en résistant à des efforts importants. Plus précisément, une des pièces reliées est raccordée à la vis et l'autre des pièces à une gaine qui enveloppe l'écrou et dans laquelle celui-ci est monté par des paliers qui lui permettent de tourner. La gaine porte encore un moteur qui répond à la commande extérieure pour faire tourner l'écrou et ainsi déplacer la vis en translation, ce qui approche ou éloigne les deux pièces l'une de l'autre.

Si la rotation relative de la vis et de l'écrou, selon un axe confondu avec l'axe de la vis, génère un mouvement de translation recherché, il faut néanmoins veiller à ce que l'écrou ne soit soumis à aucune rotation d'axe orthogonal à l'axe de la vis, c'est-à-dire d'axe situé dans le plan de symétrie de l'écrou. Dans ce cas, la vis longue et élancée s'appuie sur deux points diamétralement opposés de l'écrou qui se trouve de biais, ce qui, vu l'effort de compression auquel la vis est soumise, provoque son flambage et une usure prématurée très importante aux points de contact.

Or un vérin doit assurer deux fonctions : le guidage de pièces mécaniques selon un mouvement de translation, et l'éloignement ou le rapprochement de ces deux pièces. Un système vis-écrou remplit aisément cette seconde fonction, mais se trouve pénalisé par la première. En effet, le guidage en translation de l'écrou par rapport à la vis revient à exercer des rotations d'axe orthogonal à l'axe de la vis, ce qui dégrade très rapidement le dispositif. Une solution simple consiste à adjoindre d'autres éléments mécaniques assurant la fonction de guidage en translation. Par exemple une glissière montée à l'extrémité de la vis, qui a pour inconvénient de doubler sa longueur, ou une liaison à pivot glissant montée parallèlement à la vis, ou plus généralement une liaison prismatique, est réalisée coaxialement à la vis, et l'écrou prend alors la forme d'un patin à bille, ce qui provoque quand même une augmentation significative du diamètre du vérin et supprime sa symétrie axiale. Toutes ces solutions augmentent significativement les dimensions et le poids, mais elles supposent que les élément de guidage adjoints à la vis soient parfaitement alignés avec elle, tout au long de la course de translation, ce qui est physiquement impossible à réaliser de façon rigoureuse. Plus on s'en approche, plus les usinages sont coûteux et les pièces massives.

La solution idéale consiste donc en un montage qui n'autorise que des efforts de translation axiale entre la vis et l'écrou. Ce montage doit autoriser une rotation vis-écrou ayant même axe que la vis, et interdire toute rotation vis-écrou d'axe orthogonal à l'axe de la vis, c'est-à-dire d'axe situé dans le plan de symétrie de l'écrou.

Il ne semble pas que ce double problème soit résolu jusqu'à aujourd'hui, et les constructeurs de vérins à vis et écrou se bornent à reconnaître que leurs engins ne résistent pas à des efforts transversaux importants, ce qui réduit leur usage ou oblige à choisir des vis très épaisses pour résister à la flexion produite éventuellement par les moments de flexion.

L'élément de liaison qui est proposé ici offre une solution à ce double problème et permet donc d'utiliser des vérins à vis et écrou quelle que soit la direction des efforts qui s'exercent entre les pièces qu'ils relient, tout en arrêtant les rotations vis-écrou d'axe orthogonal à l'axe de la vis. Les vérins à vis et écrou peuvent ainsi être réduits en encombrement et en poids pour deux raisons en comparaison de ceux qu'on connaît déjà : il n'est plus besoin de choisir une vis épaisse pour résister à la flexion, et la le guidage linéaire entre la vis et la gaine est omis.

L'élément de liaison conforme à l'invention comprend les caractéristiques de la revendication 1. On définit ici comme « cardans » les mécanismes de transmission à double articulation dont les axes d'articulation sont respectivement portés par les pièces reliées par le cardan (une des deux pièces précédemment mentionnées, et la vis ou l'écrou) et sont reliés entre eux par une pièce intermédiaire qui les maintient perpendiculaires. Le principal effet technique des cardans est de transmettre des rotations entre les pièces qu'ils relient tout en autorisant des variations de l'angle que font ces pièces.

Un tel élément de liaison peut être utilisé dans un bras de robot, et notamment dans une liaison entre deux tronçons consécutifs articulés de façon à former un angle variable, l'articulation étant d'axe perpendiculaire à ces tronçons : le vérin est disposé entre deux bras de levier de ces tronçons et les écarte ou les approche.

L'élément de liaison est particulièrement utile dans les bras de robot fins, nécessaires pour se faufiler dans des ouvertures étroites, au travers d'enceintes de protection par exemple. On sait que les mécanismes d'articulation entre tronçons correspondent généralement à des endroits de renflement des bras, qui sont largement évités ici, ce qui conserve la finesse des bras.

Un autre aspect avantageux de l'invention, est le gain de poids très important qui en résulte, qui devient décisif lorsqu'il s'agit de monter bout à bout plusieurs éléments dotés d'une telle articulation. Lorsqu'on augmente le nombre d'éléments, les efforts à supporter par l'élément amont deviennent vite si considérables que l'on doit en pratique limiter une telle structure à un très petit nombre de segments.

Or l'homme de l'art sait que la structure d'un bras mécanique, pour être dextre et élancée, doit faire coexister, et si possible alterner, un grand nombre d'éléments reliés en cascade par deux types de liaisons : d'une part des rotations ayant pour axe l'axe de l'éléments amont (axe de roulis), d'autre part des rotations selon un axe orthogonal (axe de tangage) légèrement décentré par rapport à l'axe de l'élément précédent. Or la réalisation de ces rotations de tangage a jusqu'à maintenant limité une telle structure à un petit nombre d'éléments, non seulement à cause de renflement excessifs évoqués ci-dessus, mais en raison de l'augmentation rapide du poids, et donc des efforts à développer, à mesure que croît le nombre d'éléments.

L'invention rend donc possible de réaliser un bras dextre et élancé, capable de s'introduire dans une ouverture circulaire de faible diamètre, composé de plus de trois éléments modulaires comportant :
- un tronçon creux élancé, avantageusement de forme cylindrique ou prismatique,
- un dispositif mécanique avantageusement placé à l'extrémité distale de ce tronçon, et assurant une rotation autour de l'axe de symétrie du tronçon ou un axe longitudinal,
- un dispositif mécanique assurant une rotation autour d'un axe orthogonal au précédent et avantageusement décentré, qui utilise le vérin décrit ci-dessus, et qui relie cet élément modulaire au suivant.

L'ordre de ces éléments peut être interverti sans sortir du cadre de l'invention.

Si le nombre de modules montés bout à bout s'accroît, il faudra augmenter un peu la puissance développée dans le vérin, ce qui limite un peu la modularité ; néanmoins, des changements de puissance peu importants permettent de réaliser un bras comportant trois éléments ainsi définis, ou davantage.

Un autre aspect de l'invention est la mesure d'efforts, particulièrement souhaitable pour un bras dextre en milieu hostile, d'une part pour une commande précise de l'action à exécuter, d'autre part parce que, vu la forte réversibilité du vérin, on obtient aisément une détection de collisions très utile pour la sécurité.

Le vérin objet de l'invention réalise un montage qui n'autorise que des efforts de translation axiale entre la vis et l'écrou. Or ceci présente un avantage secondaire : il permet de réaliser très simplement une mesure des efforts de traction ou compression exercés par le vérin, sans aucune perturbation d'une autre grandeur mécanique perturbatrice. Il suffit de mesurer les efforts de traction ou compression s'exerçant sur la vis elle-même. Une réalisation privilégiée consiste à usiner un méplat sur la vis elle-même, au voisinage de son point d'ancrage, et à coller sur ce méplat deux ou quatre jauges extensométriques. La mesure ainsi effectuée fournit des signaux particulièrement exempts de perturbations.

Ce même principe, consistant à isoler la grandeur mécanique à mesurer, a été étendu aux autres articulations du bras : celles qui permettent un mouvement de roulis. Pour cela, un dispositif complémentaire a été utilisé afin de séparer le couple transmis de toute autre grandeur mécanique, afin d'en effectuer une mesure exempte de perturbations. Il consiste en un axe entrant relié à un élément en forme de disque, et un axe sortant relié à un autre élément en forme de disque. Les deux disques sont placés en regard, et portent chacun, par l'intermédiaire d'une rotule, une biellette sur laquelle le couple transmis engendre des contraintes de traction ou compression pure. Pour cela, la biellette est située dans un plan rigoureusement perpendiculaire à l'axe selon lequel le couple est transmis, et de direction orthoradiale. Ceci suppose que les deux pièces en forme de disque portent une excroissance, pour positionner rigoureusement chaque extrémité de la bielette. La biellette peut alors être équipée d'un dispositif quelconque de mesure de contraintes, une réalisation privilégiée étant représentée par deux ou quatre jauges extensométriques collées sur la biellette.

L'invention concerne aussi une structure modulaire de bras de robot constituée d'au moins trois éléments de diamètres pratiquement identiques, les éléments comprenant chacun un tronçon, une articulation de roulis d'axe de rotation coaxial au tronçon, et une articulation de tangage d'axe de rotation orthogonal à l'axe du tronçon et décentré du tronçon. L'élément de liaison décrit auparavant peut être placé pour l'essentiel dans les tronçons et constituer l'articulation de tangage.

Ces objets et avantages de l'invention seront mieux compris au commentaire détaillé des figures suivantes :
- la figure 1 est une vue générale d'un élément de liaison conforme à l'invention ;
- la figure 2 est une vue générale d'un bras de robot ;
- la figure 3 illustre l'implantation de l'élément de liaison dans une articulation du bras de robot ;
- les figures 4 et 5 illustrent un dispositif de mesure d'effort de pivotement disposé à une articulation du bras de robot ;
- les figures 6 et 7 illustrent une articulation de bras de robot à excellente étanchéité ;
- et la figure 8 est une coupe de l'élément de liaison, perpendiculaire à celle de la figure 1.

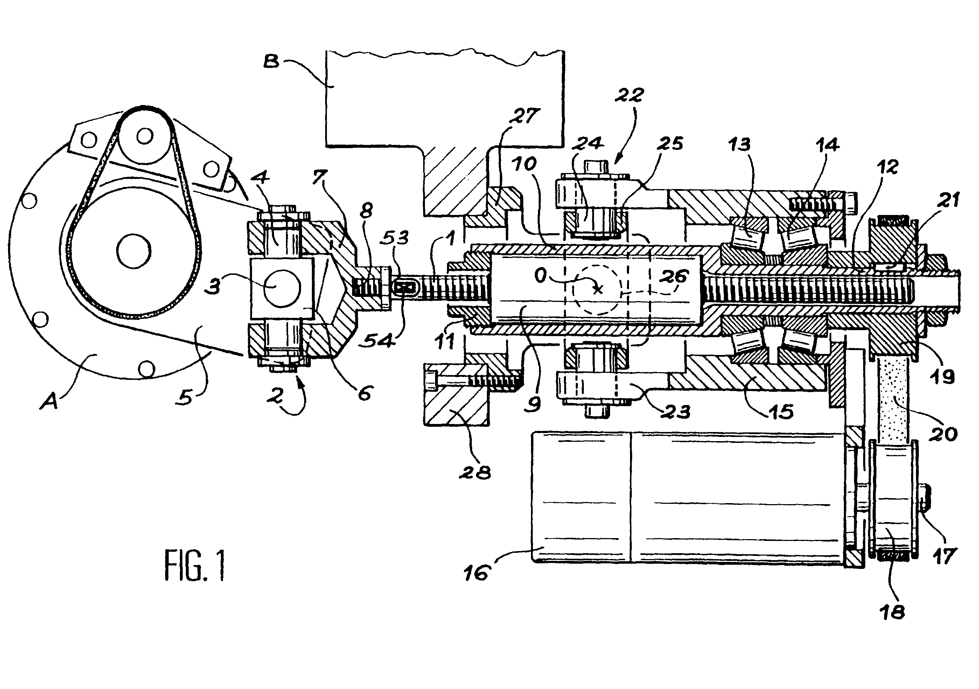

On va maintenant décrire l'élément de liaison à vis et écrou au moyen de la figure 1 : il est disposé entre deux pièces A et B dont il peut régler l'écartement le long de l'axe de la vis 1 mais qui peuvent lui transmettre des efforts orientés dans n'importe quelle direction. La vis 1 est reliée à l'une des pièces A par un cardan 2 ordinaire, comprenant deux axes 3 et 4 perpendiculaires entre eux, une première chape 5 fixée à la pièce A et articulée à l'éxe 3, un croisillon 6 uni à la fois à l'axe 3 et à l'axe 4, et une seconde chape 7 portée par l'axe 4 et dans laquelle le bout 8 de la vis 1 est retenu de façon fixe. La vis 1 est engagée par filetage à travers un écrou 9 qui est enfermé dans une gaine 10 cylindrique et y est retenu par un couvercle 11 vissé au bout de la gaine 10 et percé pour livrer passage à la vis 1. Enfin, l'axe 4 est perpendiculaire à la vis 1. La gaine 10 comprend, au-delà de l'écrou 9, un appendice 12 dans lequel s'étend l'extrémité de la vis 1 opposée à la pièce A ; deux roulements à rouleaux obliques 13 et 14 sont engagés autour de l'appendice 12 et y sont disposés dans un logement d'un corps 15 de l'élément de liaison, et ce corps 15 porte aussi, à l'extérieur du logement, un moteur 16 dont l'arbre de sortie 17 est parallèle à la vis 1 et entraîne une poulie 18 ; une poulie entraînée 19 est unie à la précédente (18) par une courroie 20, et elle est engagée autour de l'extrémité de l'appendice 12 et lui est liée par une clavette 21. L'appendice 12 s'étend en effet hors du corps 15. Le moteur 16 fait donc tourner les poulies 18 et 19, l'appendice 12, la gaine 10 et l'écrou 9 solidaire de la gaine 10, pour faire avancer et reculer la vis 1 à l'intérieur de l'écrou 9.

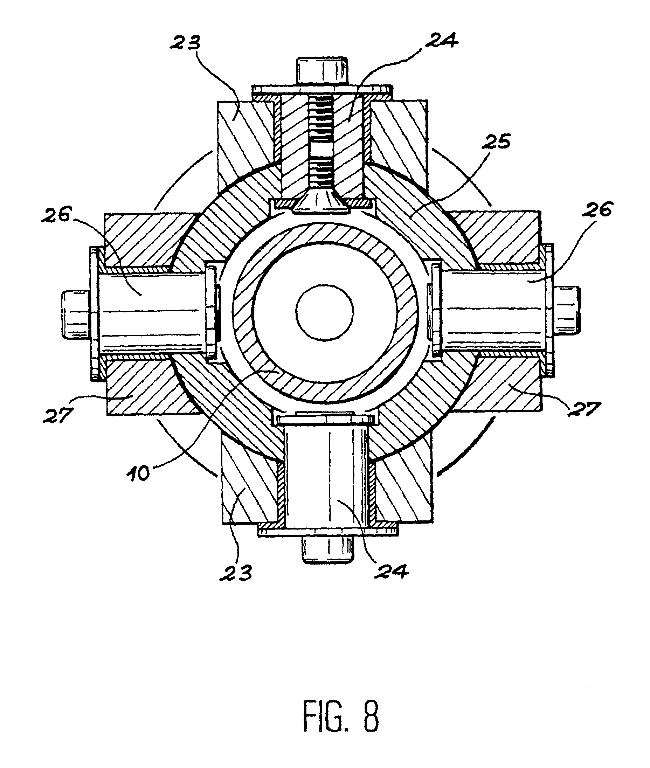

Un deuxième cardan 22 est disposé entre le corps 15 et l'autre pièce B. Plus précisément, le corps 15 est prolongé par une première chape 23 qui s'étend jusqu'à un premier axe 24 du cardan 22 auquel elle est articulée, et un croisillon 25 est uni à la fois au premier axe 24 et à un second axe 26, lequel est encore articulé à une seconde chape 27 reliée à la pièce B par une bride 28 (cette disposition est bien visible à la figure 8). Les axes 24 et 27 sont perpendiculaires, disposés dans un même plan, et leurs axes de rotation concourent au centre O de l'écrou 9. Cette disposition permet à l'écrou 9 de s'aligner avec la vis 1 quand celle-ci est disposée en biais dans l'écrou 9, car celui-ci tourne alors librement autour du centre 0, dans le deuxième cardan 22 en cédant au couple de basculement qui lui est appliqué, entraînant avec lui le corps 15 et le moteur 16 en particulier. Ces mouvements ont pour conséquence d'absorber le couple de basculement qui aurait autrement subsisté et serait apparu comme un moment fléchissant sur la vis 1, qui aurait pu lui être très néfaste. Pour résumer, l'invention permet à la vis 1 et à l'écrou 9 de prendre à tout instant l'orientation qui les soulage des efforts transversaux qui leur sont appliqués, sans que les pièces 1 et B aient à bouger.

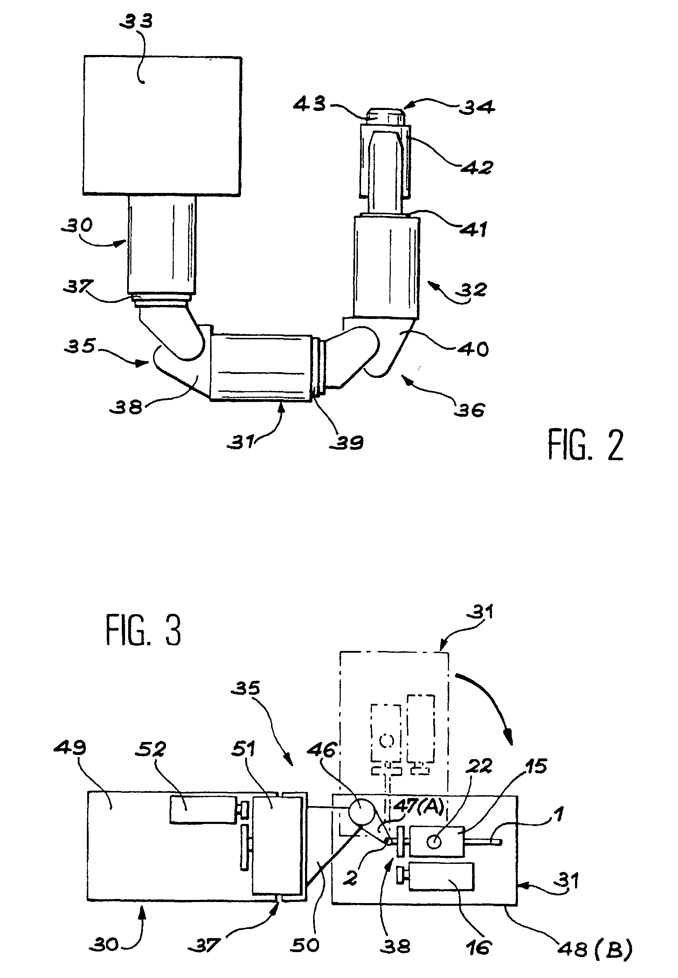

Des applications possibles de cet élément de liaison seront maintenant décrites. L'une d'entre elles consiste en un bras de robot appelé « dextre » dans le language spécialisé, présentant une grande souplesse et apte à se faufiler dans des passages étroits. L'un d'eux est représenté sur la figure 2 ; il possède trois tronçons 30, 31 et 32 entre un support mobile 33 et un poignet 34 d'extrémité ; les tronçons 30, 31 et 32 sont reliés par une épaule 35 et un coude 36 appelés ainsi par analogie avec le bras humain. L'épaule 35 et le coude 36 comprennent chacun une articulation de pivotement 37 ou 39 appelée aussi articulation de roulis, et une articulation de pliage 38 ou 40 du bras, appelée aussi articulation de tangage. Enfin, le poignet 34 est muni de ses propres articulations, à savoir une articulation de roulis 41, une articulation de tangage 42 et une dernière articulation de roulis 43. Les deux premières articulations mentionnées sont situées du côté du tronçon 32, et la dernière est au bout du poignet 34 pour lui permettre de faire tourner un outil ou un autre objet qu'il tient.

L'élément de liaison mentionné à la figure 1 est en fait intégré de préférence aux articulations de tangage 38, 40 ou 42 de la façon décrite à la figure 3 et qui représente par exemple l'épaule 35, des montages identiques ou presque étant prévus pour le coude 36 et le poignet 34.

Les tronçons 30 et 31 sont reliés par une charnière 46 disposée à leurs extrémités concourantes ; la pièce A correspond à un levier 47 qui termine le tronçon 30 après la charnière 46, et la pièce B correspond à l'enveloppe 48 du tronçon 31. On a figuré en particulier les emplacements des cardans 2 et 22, ainsi que la vis 1, le moteur 16 et le corps 15 de l'écrou 9. On remarque notamment que la vis 1 reste perpendiculaire à la charnière 46. Le premier tronçon 30 se compose par ailleurs de deux portions : une première portion, qu'on pourrait appeler une portion principale 49 à cause de sa longueur et une portion de transition 50 qui s'étend partiellement dans le tronçon 31 jusqu'à la charnière 46, comprend le levier 47 et constitue en fait une pièce de liaison entre le deuxième tronçon 31 et la portion principale 49 du premier tronçon 30. L'articulation de roulis 37 est disposée entre ces deux portions 49 et 50, et comprend un réducteur spécialisé, appelé « Harmonic Drive », 51 qui est monté entre les deux portions 49 et 50 pour les soutenir ; ce réducteur 51 est mû par un moteur 52 disposé dans la portion principale 49.

Le réducteur 51 a une forme sensiblement cylindrique et un faible encombrement : il est en fait spécialement conçu pour ces articulations de roulis et son principal avantage est de ne pas contribuer à épaissir le bras. L'élément de liaison qui constitue l'articulation de tangage 38 n'est pas très encombrant non plus, grâce à l'emploi de l'invention : on voit en particulier que la vis 1, le corps 15 et le moteur 16 s'étendent longitudinalement assez loin dans le tronçon 31, ce qui n'est pas gênant, mais possèdent une faible largeur, qui n'interdit pas au tronçon 31 d'être mince ; si on avait voulu par exemple utiliser un autre réducteur harmonique 51 pour l'articulation de tangage 38, il aurait fallu le disposer avec ses axes de rotation parallèles à la charnière 46 ou perpendiculaires au plan de la figure, ce qui aurait produit de gros problèmes d'aménagement, car le moteur d'entraînement de ce réducteur n'aurait pas pu être placé comme le moteur 52 vis-à-vis du réducteur 51 sans fortement saillir à l'extérieur ; il aurait fallu disposer ce moteur sensiblement comme le moteur 16, mais un système supplémentaire de transmission de mouvement aurait dû être ajouté entre lui et le réducteur harmonique 51.

L'élément de liaison à vis et écrou permet de transmettre des forces importantes entre les tronçons 30 et 31 et d'imposer des mouvements précis et indéréglables ; l'angle de débattement entre les tronçons 30 et 31 peut être important, d'au moins 90° en pratique, comme les deux états de la figure 3 le montrent.

On décrira maintenant sur les figures 1, 4 et 5 la façon dont les efforts exercés sur les articulations sont mesurés.

On utilise des jauges de contrainte aussi bien pour les articulations de roulis que de tangage. Pour celle-ci, la vis 1 est munie, près du premier cardan 2, plus précisément entre la première pièce A et l'écrou 9, d'un méplat 53 sur lequel est collée une jauge 54 au moins, et qui est orientée de façon à mesurer les déformations de traction et de compression de la vis 1 entre le premier cardan 2 et l'écrou 9.

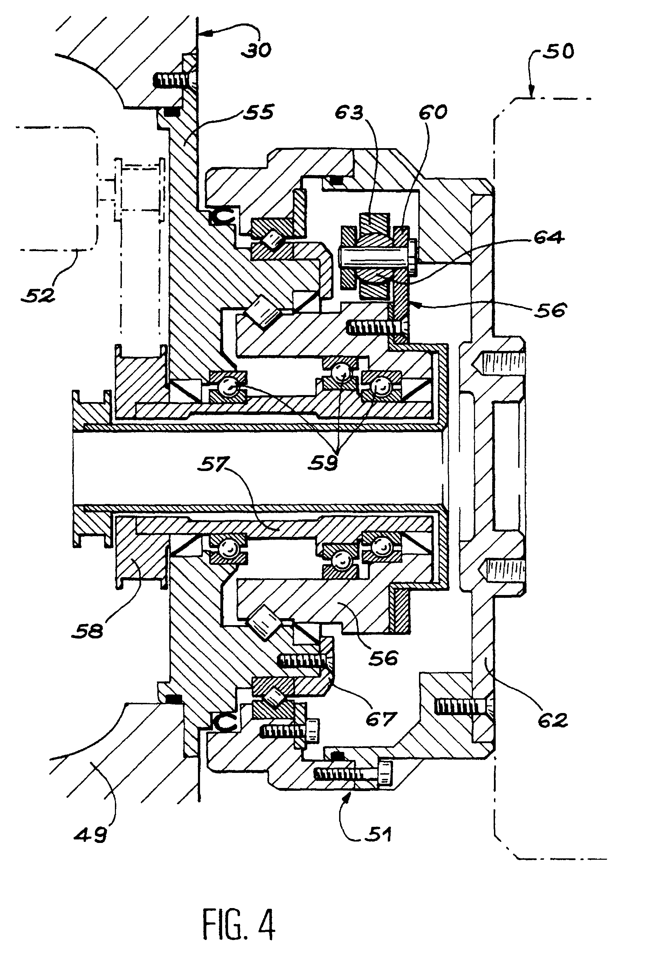

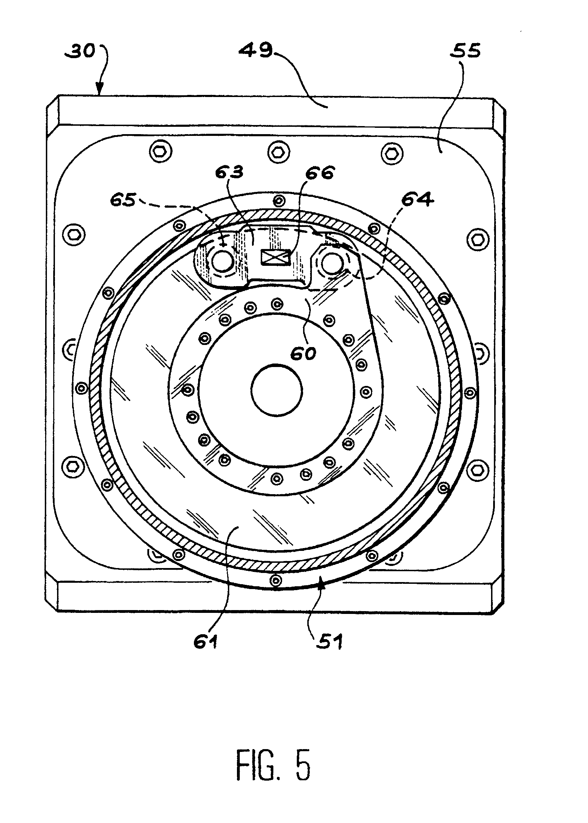

Un dispositif plus compliqué doit être de préférence adopté pour les articulations de roulis, sur lesquelles les efforts se traduisent principalement en déformations de torsion exercées sur des arbres. Un procédé classique consiste à mesurer ces déformations de torsion avec des jauges collées à la surface des arbres en faisant un angle de 45° avec l'axe, c'est-à-dire dans la direction des allongements principaux de torsion, mais on constate que ce procédé est très difficile à appliquer car une grande précision d'orientation des jauges est requise, et on observe toujours des défauts de précision importants. C'est pourquoi un procédé différent est proposé ici (figures 4 et 5). Le réducteur harmonique 51 comprend une première portion de réducteur 55 fixé à la portion principale 49 du tronçon 30, une seconde portion de réducteur 56 fixée à la portion d'extrémité 50 du tronçon 30 et un arbre d'entraînement 57, dont l'extrémité porte une poulie 58 entraînée par le moteur 52, soutenu par les portions de réducteur 55 et 56 par des roulements 59 et qui entraîne la seconde portion 56 à une vitesse différente de la sienne au moyen d'un engrenage non représenté (le réducteur harmonique 51 étant un objet de commerce, il ne nécessite pas de description complète).

La seconde portion 56 est munie d'un disque 60 qui s'étend dans un plan perpendiculaire à l'arbre d'entraînement 57, et un autre disque 61, parallèle et coaxial au précédent, est vissé à une enveloppe 62 du réducteur 51 adjacente à la portion d'extrémité 50. Les disques 61 et 62 sont unis par une bielle 63, montée aux disques 60 et 61 par des rotules 64 et 65 respectivement et orientée tangentiellement au mouvement de rotation des disques 60 et 61. Les efforts transmis par l'arbre d'entraînement 57 à la portion d'extrémité 50 passent donc entièrement par la bielle 63, qui est tendue ou comprimée entre les rotules 64 et 65. Il suffit alors de coller des jauges 66 à la surface de la bielle 63 pour mesurer ses déformations avec une grande précision et en déduire les efforts appliqués à l'articulation de roulis ; les rotules 64 et 65 assurent que la bielle 63 n'est soumise à aucun autre effort que la traction ou la compression et garantissent donc que les jauges 66 mesurent bien les efforts appliqués à la bielle 63. Une seule jauge 1 ou 66 a été représentée à chaque fois, mais il est usuel d'en coller plusieurs côté à côte pour faire la moyenne de leurs mesures, ou d'en coller sur la face opposée de la pièce de support (ici, la vis 1 ou la bielle 63).

On sait que les déformations des jauges de contraintes sont mesurées en faisant passer un courant dans des fils conducteurs qui constituent leur partie sensible et en mesurant les variations de résistance de ces fils conducteurs en fonction des déformations. Il existe diverses techniques pour accomplir cette fourniture de courant et cette mesure sur des jauges mobiles, dont la plus simple consiste à utiliser des raccords électriques comprenant des pistes conductrices et des balais frottant sur ces pistes en fonction du déplacement des jauges. Dans le cas présent, de telles pistes pourraient consister en pistes circulaires déposées sur une face 67 de la première portion de réducteur 55 orientée en face de la bielle 63, et, pour l'articulation de tangage, on peut disposer des pistes conductrices sur la face interne de l'enveloppe 48 du tronçon 31, à l'endroit devant lequel le méplat 53 et la jauge 54 se déplacent.

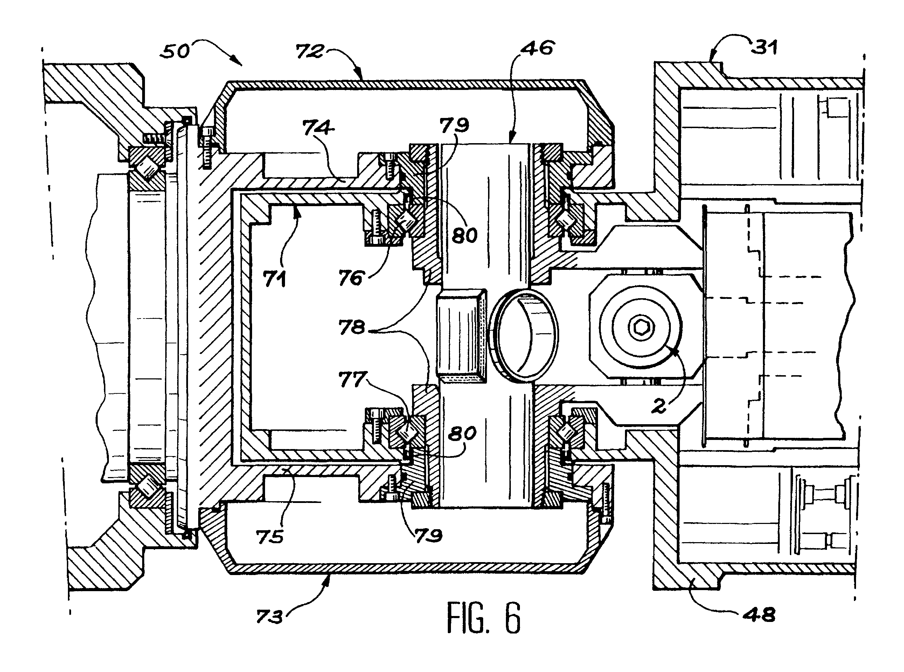

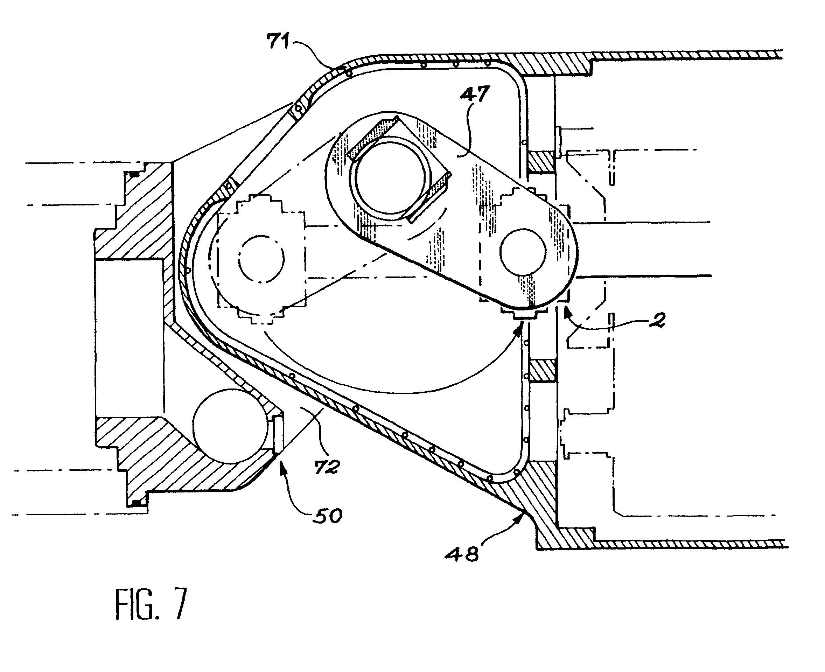

Un dernier forme d'exécution de l'invention va être décrit en référence aux figures 6 et 7 : il s'agit d'un montage permettant de garantir facilement l'étanchéité de l'articulation de tangage. L'enveloppe 48 est pour cela terminée en une enveloppe de chambre 71 qui contient en particulier le levier 47 et dans laquelle le cardan 2 se déplace au cours des mouvements de vissage de la vis 1 ; plus précisément, l'enveloppe de chambre 71 tourne autour du levier 47, qui y occupe donc une position variable.

L'enveloppe de chambre 71 a deux faces opposées qui sont couvertes par des joues 72 et 73 d'une chape formant la structure de la portion d'extrémité 50. Les joues 72 et 73 sont creuses, et la charnière 46 traverse leurs parois intérieures 74 et 75 en sus des parois de l'enveloppe de chambre 71, par des ouvertures qui y sont pratiques.

La charnière 46 est soutenue dans la paroi de l'enveloppe de chambre 71 par une paire de roulements 76 et 77 dont les bagues intérieures sont comprimées axialement entre des épaulements 78 de la charnière 46 et des épaulements 79 des parois 74 et 75. L'étanchéité est assurée par des joints à lèvre 80 engagés entre les épaulements 79 et l'enveloppe de chambre 71 à l'endroit de ses ouvertures. On s'aperçoit que la protection offerte par les joues 72 et 73, jointe à la petitesse des ouvertures de l'enveloppe de chambre 71, réduit énormément les risques d'intrusion d'impuretés dans l'enveloppe 48 ou 71. Les joues 72 et 73 s'étendent tout près de l'enveloppe de chambre 71, et leurs parois extérieures sont continues puisque la charnière 46 finit sous elles.

## Revendications

1. Elément de liaison entre une première pièce (A) et une deuxième pièce (B), comprenant un vérin à écrou (9) et à vis (1) engagée à travers l'écrou (9), un corps de vérin (15) dans lequel l'écrou est soutenu par des paliers (13, 14) avec liberté de tourner, un moteur (16) apte à produire des rotations entre la vis (1) et l'écrou (9), et des premiers et deuxièmes moyens de raccordement (2, 22) entre la première pièce et la vis et entre la deuxième pièce et l'écrou, **caractérisé en ce que** les premiers et deuxièmes moyens de raccordement consistent en des cardans, les cardans admettant chacun deux axes de rotation (3, 4, 24, 26) perpendiculaires à la vis et à l'écrou, et les axes de rotation d'un des cardans convergent vers le centre (0) de l'écrou.

2. Bras de robot, **caractérisé en ce qu'**il comprend au moins un élément de liaison selon la revendication 1, la première pièce et la deuxième pièce étant des tronçons (30, 31, 32, 34) consécutifs du bras.

3. Bras de robot selon la revendication 2, **caractérisé en ce que** les tronçons du bras sont reliés entre eux par une première articulation (46), la vis étant perpendiculaire (1) à la première articulation et distante d'elle d'un bras de levier(47).

4. Bras de robot selon la revendication 3, **caractérisé en ce que** l'élément de liaison est logé dans un premier des tronçons (31), l'autre des tronçons (30) comprenant une portion principale (49) et une portion intermédiaire (50) disposée entre le premier tronçon (31) et la portion principale (49), la portion intermédiaire (50) portant le bras de levier (47) et étant raccordée à la portion principale par une deuxième articulation (51) perpendiculaire à la première articulation (46).

5. Bras de robot selon la revendication 4, **caractérisé en ce que** des dispositifs de mesure d'effort (52, 66) sont disposés dans l'élément de liaison et dans la deuxième articulation.

6. Bras de robot selon la revendication 4, **caractérisé en ce que** le dispositif de mesure d'effort disposé dans l'élément de liaison comprend au moins une jauge de contrainte (52) collée sur un méplat (53) de la vis (1) entre l'écrou (9) et la première pièce (A).

7. Bras de robot selon l'une quelconque des revendications 5 ou 6, **caractérisé en ce que** le dispositif de mesure d'effort disposé dans la deuxième articulation comprend au moins une jauge de contrainte, deux éléments rotatifs coaxiaux (60, 61) appartenant à des tronçons (30), une bielle (63) unie auxdits éléments rotatifs (50, 61) par des rotules (64, 65), la jauge de contrainte (66) étant collée à la bielle.

8. Bras de robot selon l'une quelconque des revendications 3 à 7, **caractérisé en ce que** la première articulation comprend une charnière (46) dépassant d'une portion d'enveloppe (71) d'un premier des tronçons, un autre des tronçons comprenant des joues creuses (72, 73) couvrant deux faces opposées de la portion d'enveloppe et dans lesquelles finit la charnière (46), des joints (80) étant disposés dans des ouvertures de la portion d'enveloppe (71) et autour de la charnière (46).

9. Structure modulaire de bras de robot constituée d'au moins trois éléments, les éléments comprenant chacun un tronçon (30, 31, 32), une articulation de roulis (37, 39, 41) d'axe de rotation coaxial au tronçon, et une articulation de tangage (38, 40, 42) d'axe de rotation orthogonal à l'axe du tronçon et décentré du tronçon, **caractérisé en ce que** les articulations de tangage sont mues par des éléments de liaison conformes à la revendication 1.

## Patentansprüche

1. Verbindungselement zwischen einem ersten Teil (A) und einem zweiten Teil (B), mit einem Gewindespindelantrieb, eine Mutter (9) und eine in der Mutter (9) sitzende Schraube (1) umfassend, einem Gehäuse (15), das die Mutter mittels Lagern (13, 14) frei drehbar trägt, einem Motor (16), fähig Rotationen zwischen der Schraube (1) und der Mutter (9) zu bewirken, und erste und zweite Verbindungseinrichtungen (2, 22) zwischen dem ersten Teil und der Schraube und dem zweiten Teil und der Mutter,
**dadurch gekennzeichnet,**
**dass** die ersten und zweiten Verbindungseinrichtungen Kardangelenke sind, wobei diese Kardangelenke jeweils zwei Rotationsachsen (3, 4, 24, 26) umfassen, senkrecht zur der Schraube und zu der Mutter, und die Rotationsachsen eines der Kardangelenke sich in dem Schraubenzentrum (0) vereinigen bzw. schneiden.

2. Roboterarm, **dadurch gekennzeichnet, dass** er wenigstens ein Verbindungselement nach Anspruch 1 umfasst, wobei das erste Teil und das zweite Teil aufeinanderfolgende Teilstücke (30, 31, 32, 34) des Arms sind.

3. Roboterarm nach Anspruch 2, **dadurch gekennzeichnet, dass** die Teilstücke des Arms durch ein erstes Gelenk (46) miteinander verbunden sind, wobei die Schraube (1) senkrecht zu dem ersten Gelenk ist, von diesem beabstandet durch einen Hebelarm (47).

4. Roboterarm nach Anspruch 3, **dadurch gekennzeichnet, dass** das Verbindungselement in einem ersten (31) der Teilstücke sitzt, wobei das andere (30) der Teilstück einen Hauptteil (49) und einen Zwischenteil (50) umfasst, angeordnet zwischen dem ersten Teilstück (31) und dem Hauptteil (49), und der Zwischenteil (50) den Hebelarm (47) trägt und mit dem Hauptteil durch ein zum ersten Gelenk (46) senkrechtes zweites Gelenk (51) verbunden ist.

5. Roboterarm nach Anspruch 4, **dadurch gekennzeichnet, dass** in dem Verbindungselement und in dem zweiten Gelenk Kraftmesseinrichtungen (54, 66) angeordnet sind.

6. Roboterarm nach Anspruch 4, **dadurch gekennzeichnet, dass** die in dem Verbindungselement angeordnete Kraftmesseinrichtung wenigstens einen auf eine Abflachung (53) der Schraube (1) geklebten Dehnungsmessstreifen (54) umfasst, zwischen der Mutter (9) und dem ersten Teil (A).

7. Roboterarm nach einem der Ansprüche 5 oder 6, **dadurch gekennzeichnet, dass** die in dem zweiten Gelenk angeordnete Kraftmesseinrichtung wenigstens einen Dehnungsmessstreifen, zwei zu Teilstücken (30) gehörende koaxiale Rotationselemente (60, 61) und ein mit den beiden genannten Rotationselementen (60, 61) durch Kugelgelenke (64, 65) vereinigtes Zwischenglied (63) umfasst, wobei der Dehnungsmessstreifen (66) auf das Zwischenglied geklebt ist.

8. Roboterarm nach einem der Ansprüche 3 bis 7, **dadurch gekennzeichnet, dass** das erste Gelenk ein Scharnier (46) umfasst, das aus einem Hüllenteil (71) eines ersten der Teilstücke herausragt, wobei ein anderes der Teilstücke Hohlschalen (72, 73) umfasst, die zwei entgegengesetzte Seiten dieses Hüllenteils überdecken und in denen das Scharnier (46) endet, wobei Dichtungen (80) in Öffnungen bzw. Fugen des Hüllenteils (71) und um das Scharnier (46) herum angeordnet sind.

9. Roboterarm-Modularstruktur, gebildet durch wenigstens drei Element, wobei jedes der Elemente ein Teilstück (30, 31, 32), ein Rollbewegungsgelenk (37, 39, 41) mit zum Teilstück koaxialer Drehachse, und ein Nickbewegungsgelenk mit zu der Achse des Teilstücks rechtwinkliger und bezüglich des Teilstücks dezentrierter bzw. exzentrischer Drehachse umfasst, **dadurch gekennzeichnet, dass** die Nickbewegungsgelenke durch Verbindungselemente nach Anspruch 1 bewegt werden.

## Claims

1. Linking component connecting a first part (A) and a second part (B), comprising a jack with a nut (9) and a screw (1) passing through nut (9), a jack body (15) in which the nut is supported by bearings (13, 14) such that it is free to rotate, a motor (16) capable of causing rotations between the screw (1) and the nut (9), and first and second means (2, 22) for connecting the first part to the screw and the second part to the nut, **characterized in that** the said first and second connecting means consist of two universal joints, said universal joints each having two axes of rotation (3, 4, 24, 26) perpendicular to the screw and the nut, and the axes of rotation of one of the universal joints meeting at the center (0) of the nut.

2. Robot arm **characterized in that** it comprises at least one linking component of claim 1, the first and second part being consecutive sections (30, 31, 32, 34) of the arm.

3. Robot arm of claim 2 **characterized in that** the sections of the arm are connected to one another by a first hinge (46), the screw (1) being perpendicular to the first hinge and kept remote from it by a lever arm (47).

4. Robot arm of claim 3 **characterized in that** the linking component is housed .inside a first section (31), the other section (30) comprising a main portion (49) and an intermediate portion (50) disposed between the first section (31) and the main portion (49), the intermediate portion (50) bearing lever arm (47) and being connected to the main portion by a second joint (51) that is perpendicular to first joint (46).

5. Robot arm of claim 4 **characterized in that** the devices for measuring force (52, 66) are disposed inside the linking component and the second joint.

6. Robot arm of claim 4 **characterized in that** the device for measuring force disposed inside the linking component comprises at least one stress gauge (52) bonded to a flat spot (53) on screw (1) between nut (9) and first part (A).

7. Robot arm of either claim 5 or 6 **characterized in that** the device for measuring force disposed inside the second joint comprises at least one stress gauge, two coaxial rotating components (60, 61) fastened to sections (30), a connecting rod (63) fastened to the said rotating components (50, 61) by joints (64, 65), the stress gauge (66) being bonded to the connecting rod.

8. Robot arm of any of claims 3 to 7 **characterized in that** the first joint comprises a hinge (46) that extends beyond a portion of the housing (71) of a first section, one of the other sections having concave flanges (72, 73) covering two opposite surfaces of the portion of the housing in which the hinge (46) terminates, seals (80) being disposed in openings of the portion of the housing (71) and around the hinge (46).

9. Modular robot arm structure composed of at least three elements, said elements each comprising a section (30, 31, 32), a roll joint (37, 39, 41) that rotates coaxially to the section, and a pitch joint (38, 40, 42) with an axis of rotation that is orthogonal to the axis of the section and offset relative to the section, **characterized in that** the pitch joints are driven by the linking components of claim 1.
